Europäisches Patentamt

European Patent Office

Office européen des brevets

(11) Numéro de publication: **0 276 620**
**A1**

## (12) DEMANDE DE BREVET EUROPEEN

(21) Numéro de dépôt: **87403016.6**

(22) Date de dépôt: **31.12.87**

(51) Int. Cl.⁴: **B60P 1/64**

(30) Priorité: **31.12.86 FR 8618524**

(43) Date de publication de la demande:
**03.08.88 Bulletin 88/31**

(84) Etats contractants désignés:
**ES GR**

(71) Demandeur: **BENNES MARREL, Société Anonyme dite**
**Zone Industrielle Sud**
**F-42161 Andrézieux Boutheon Cédex(FR)**

(72) Inventeur: **Bore, Raymond Marie Jean**
**16, rue, Voltaire**
**F-42270 St Priest en Jarez(FR)**

(74) Mandataire: **Rinuy, Santarelli**
**14, avenue de la Grande Armée**
**F-75017 Paris(FR)**

(54) **Dispositif de levage, en particulier pour un camion à benne amovible.**

(57) Le dispositif de halage (3), (7), (9), est prévu charger sur le camion (1) une benne (2).

Le dispositif (3), (7), (9) forme un ensemble standard susceptible d'être monté tel quel sur le camion (1). On choisit uniquement la distance (13) pour définir la position du centre de gravité de la benne (2) sur le camion (1) pendant le transport.

On maintient ainsi à une valeur plus faible et plus régulière la pression hydraulique dans le vérin (9) à toutes les phases du fonctionnement. Ce dispositif standard peut être monté tel quel sur divers types de camions.

EP 0 276 620 A1

Fig. 1

## Dispositif de levage, en paticulier pour un camion à benne amovible

L'invention concerne un dispositif de halage, par exemple pour un camion à benne amovible.

Il est connu d'utiliser un camion équipé d'un mécanisme lui permettant de poser au sol le conteneur ou benne qu'il transportait. Inversement, ce mécanisme permet au camion de reprendre le conteneur ou benne posé au sol et de le charger sur l'arrière de son châssis en vue de le transporter. A titre d'exemple, un tel mécanisme est assuré par un ou plusieurs vérins hydrauliques de levage. Lorsqu'on doit appliquer l'effort maximum. c'est-à-dire lorsque le bras de halage soulève l'avant de la benne encore posée au sol, on doit alimenter les vérins sous une pression hydraulique parfois très élevée. Cela oblige à surdimensionner divers organes mécaniques, c'est-à-dire à augmenter le poids mort du véhicule.

En outre, le mécanisme doit obligatoirement être dimensionné et positionné sur le camion en fonction, à la fois du type du camion et du type de la charge à manutentionner. En d'autres termes la structure du mécanisme de chargement doit être calculée en fonction des caractéristiques de poids et de dimensionnement du conteneur, faute de quoi, après chargement sur le camion, le centre de gravité du conteneur pourrait se trouver placé trop en avant ou trop en arrière par rapport à la position optima qui correspondrait à une bonne répartition des poids entre les essieux du camion.

L'invention a pour objet d'éviter ces inconvénients et de réaliser un dispositif de chargement susceptible d'être fabriqué suivant un modèle standard pour être ensuite monté tel quel sur des camions de types divers, pour charger des conteneurs ou des plates-formes de types également divers.

L'objet ci-dessus est réalisé en prévoyant un dispositif de manutention destiné à équiper le châssis d'un camion porte-conteneurs, ce dispositif comprenant un bras coudé terminé à son sommet par un crochet susceptible de s'adapter sur la face verticale avant d'un conteneur, alors que l'arrière du bras s'articule sur l'avant d'un faux-châssis basculant où il est susceptible de venir buter sous l'action d'au moins un vérin reliant ce bras à l'avant du châssis du camion, tandis qu'enfin l'arrière du faux-châssis est lui-même articulé sur le châssis, et il est caractérisé en ce que le point d'articulation de l'arrière du faux-châssis sur le châssis se situe en avant de l'extrémité arrière du châssis, dont il est séparé par une distance approximativement supérieure ou égale à 0,5 fois celle des deux axes d'articulation avant et arrière portés par le faux-châssis.

En d'autres termes, cette disposition permet, d'une part de dimensionner au mieux les bras de levier pour écrêter les pressions hydrauliques maxima, d'autre part, de construire le mécanisme de levage sous la forme d'un module standard, adaptable tel quel sur divers types de camion pour manipuler divers types de conteneurs. Pour monter ce module standard sur un camion d'un type donné, l'entreprise chargée de l'adaptation calculera la distance précitée selon laquelle l'axe arrière du faux-châssis est situé en avant de l'extrémité arrière du châssis, en tenant compte seulement de la position requise pour le centre de gravité du conteneur lorsque celui-ci est posé sur le camion en position de transport.

Une solution préférée prévoit que la distance en question entre l'arrière du châssis et l'axe arrière du faux-châssis est au plus du même ordre de grandeur que la distance séparant les deux axes d'articulation, avant et arrière, du faux-châssis (rapport voisin de 1).

L'invention sera mieux comprise grâce à des exemples de réalisation qui sont représentés sur les dessins annexés sur lesquels :

- les figures 1 à 3 sont des vues de côté montrant un mécanisme modulaire standard en trois étapes successives de son fonctionnement pour charger un conteneur sur un camion (début, changement d'axe de rotation, et fin) ou au contraire pour le déposer au sol.

- les figures 4 à 6 sont des vues similaires correspondant à un autre mécanisme modulaire, et

- la figure 7 est un diagramme montrant que le mécanisme de l'invention permet de réduire considérablement la pression hydraulique maxima dans les vérins (en particulier, toutes choses égales par ailleurs, un appareil connu d'après le brevet français 2.185.520 correspond à un pic de pression de 350 bars -courbe en pointillés - alors que le mécanisme correspondant selon l'invention ramène ce pic à seulement 200 bars - courbe en traits pleins - ).

Les figures montrent un camion 1 destiné à transporter un conteneur 2 ou autre fardeau analogue. Pour cela est prévu sur le châssis du camion 1, un dispositif de levage, entièrement situé au-dessus dudit châssis, qui comprend un bras coudé 3, terminé à son sommet par un crochet 4. Celui-ci est prévu pour venir s'adapter sur un axe transversal de levage 5, équipant la face verticale avant du conteneur 2.

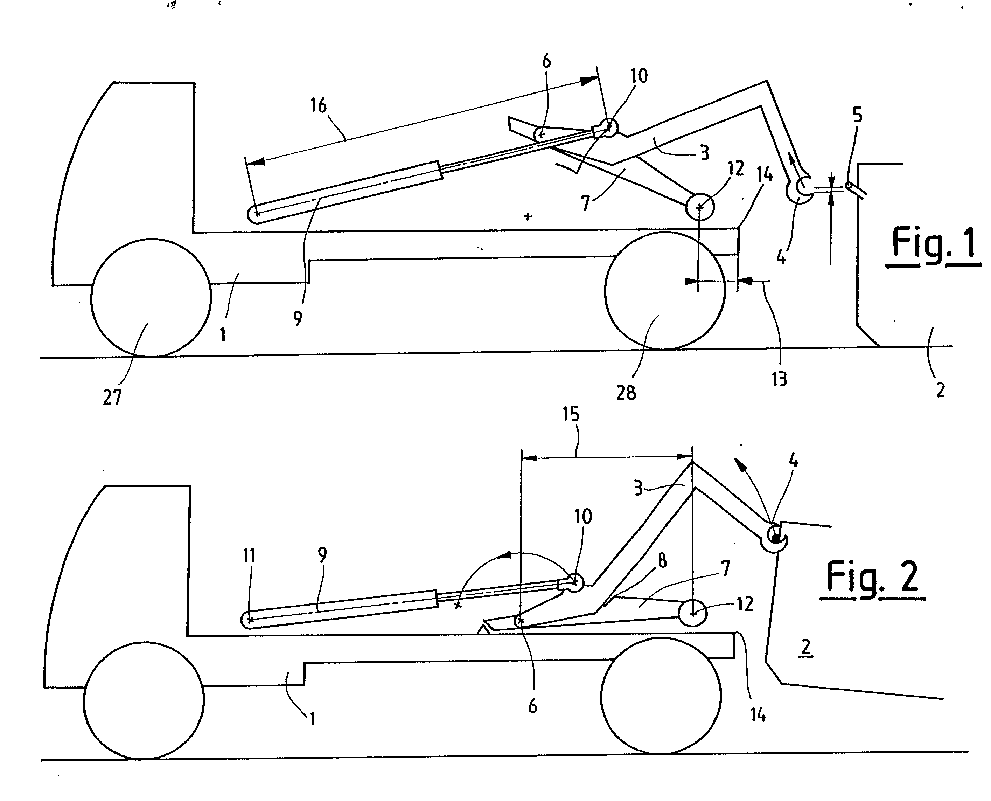

A l'arrière, le bras coudé 3 s'articule par un axe 6 sur l'avant d'un faux-châssis basculant 7 où il est susceptible de venir buter en 8 (figure 2) sous l'action d'au moins un vérin de levage 9. Le ou les vérins de levage 9 relient un axe 10 du bras coudé 3 à un axe 11 situé à l'avant du châssis du camion 1.

Ce bras est en fait doublement coudé puisqu'il comporte trois tronçons, un tronçon disposé verticalement en configuration de benne chargée, un tronçon disposé horizontalement en cette même configuration, et un ronçon incliné de raccordement au faux-châssis par lequel ce bras vient en butée contre le faux-châssis en configuration de début de chargement ; le vérin 9 est articulé au bras à l'intérieur de ce coude (tronçon de raccordement/tronçon horizontal).

Un pivot 12 est prévu sensiblement en avant de l'extrémité arrière 14 de ce châssis, extrémité dont il est séparé par une dimension 13. Cette distance 13 est approximativement comprise entre 0,5 et 1 fois la distance 15 séparant les deux axes d'articulation 6 et 12 (pour des raisons de lisibilité, ce rapport est représenté inférieur à 0,5 sur les figures 1 à 3).

Une solution préférée consiste à prévoir que la distance 13 soit du même ordre de grandeur que la distance 15.

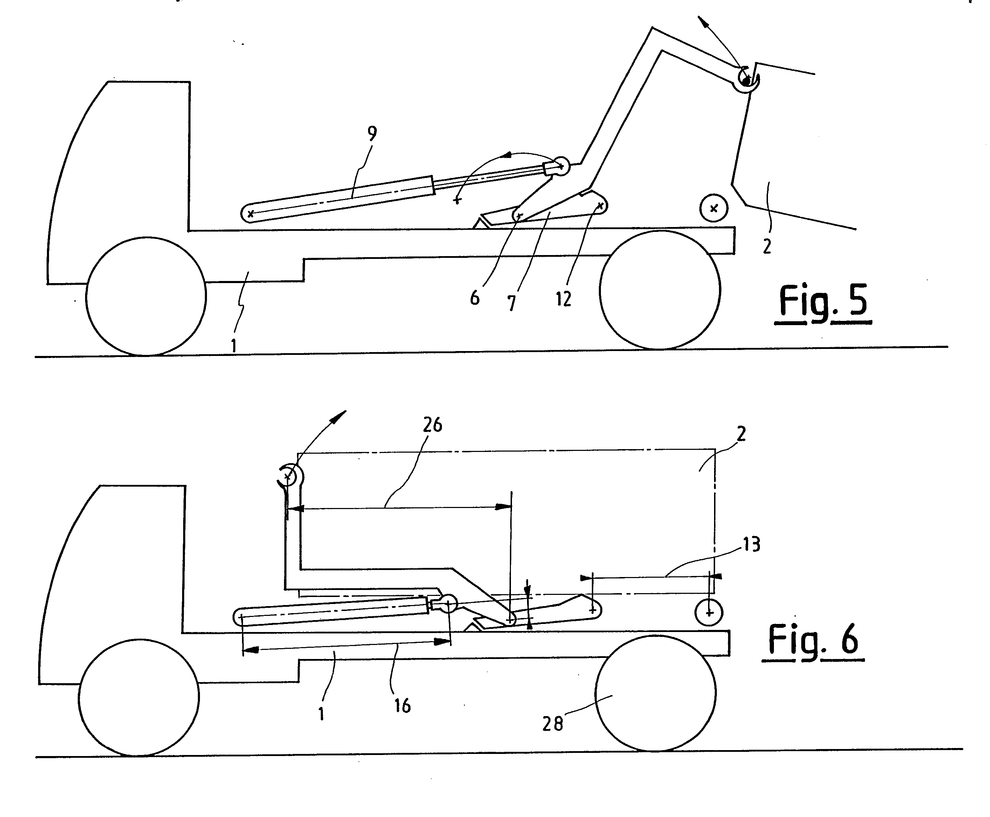

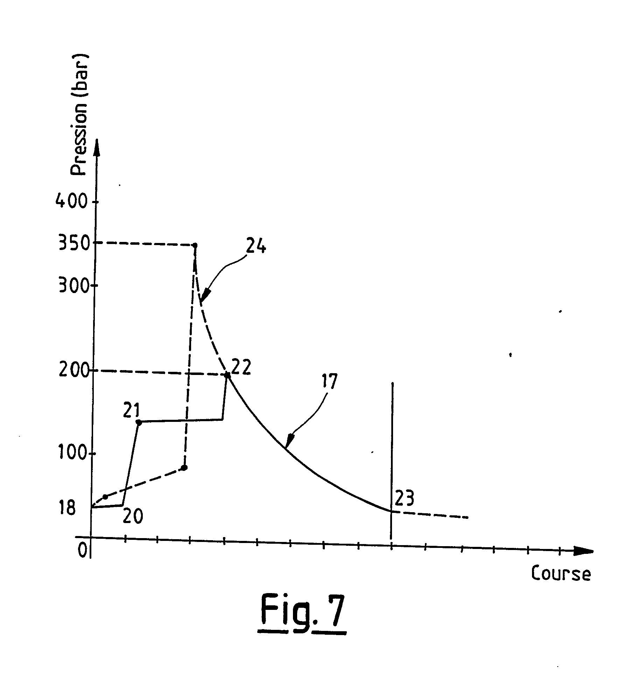

Lorsqu'on utilise le dispositit 7, 3, 9 pour prendre qu sol le conteneur 2 (figure 1) afin de le soulever (figures 2 et 5) avant de la charger sur le camion 1 (figure 6), on envoie la pression hydraulique dans le vérin 9 pour réduire sa longueur au fur et à mesure des phases opératoires. L'évolution de cette pression hydraulique varie en fonction de la course, c'est-à-dire de la longueur 16 du vérin 9, suivant une loi 17 qui est illustrée à la figure 7 par la courbe en traits pleins 17. En particulier :

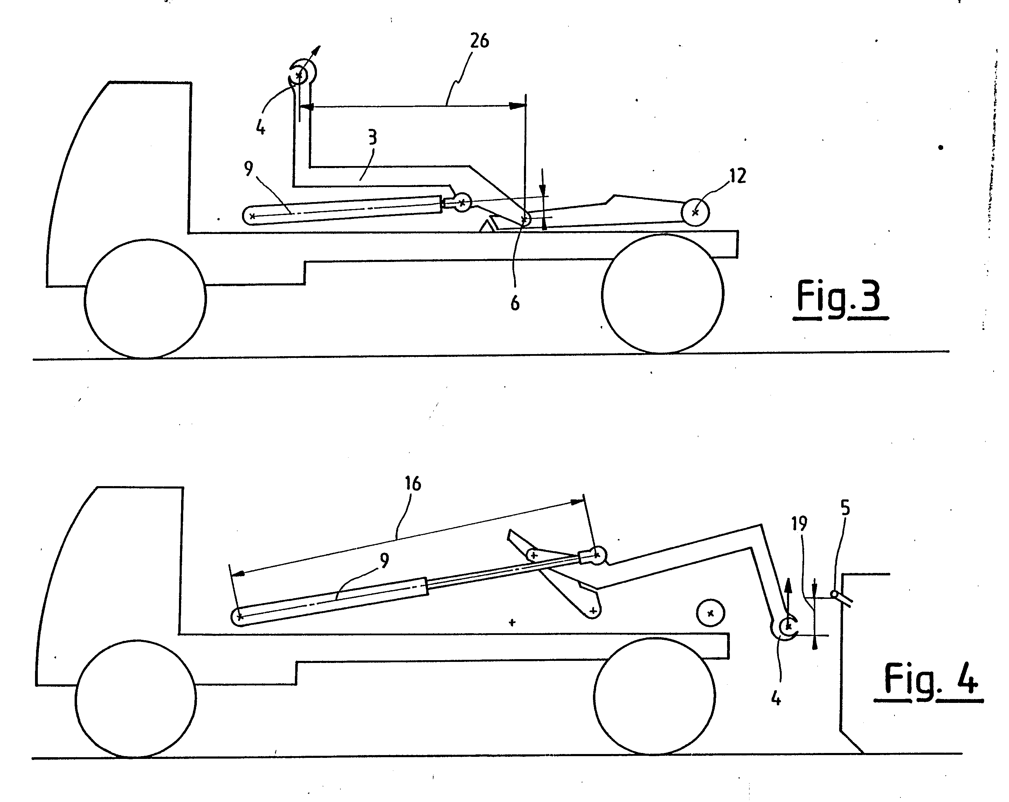

a) le point 18 correspond à la phase de départ, par exemple quand le crochet 4 se trouve à une distance 19 (figure 4) plus ou moins importante au-dessous de l'axe d'accrochage 5 ;

b) le point 20 correspond à la position pour laquelle le crochet 4 est sur le point d'entrer en contact avec l'axe de levage 5 (figure 1) ;

c) le point 21 correspond à l'instant de la trajectoire où le faux-châssis basculant 7 arrive en appui sur le châssis du camion 1 (figures 2 et 5) ;

d) on observe en 22 un maximum de pression dans le vérin 9 lorsqu'après la position des figures 2 et 5, la diminution de longueur du vérin 9 provoque le basculement du bras coudé 3 autour de l'axe 6, désormais fixe. A partir de ce point 22, la pression dans le vérin 9 ne cesse de décroître jusqu'au point 23 où le chargement du conteneur 2 est terminé (figures 3 et 6).

Il est à noter qu'en début de chargement le faux-châssis est peu incliné (moins de 60° voire 45°) par rapport à l'horizontale, l'axe 6 restant sensiblement en avant de l'axe 12. Cela correspond à une faible amplitude angulaire au cours de la première phase de chargement : rotation autour de l'axe 12. A la fin de cette première phase de chargement (voir figures 2 et 5) le point d'articulation 10 du vérin du bras est en arrière de l'axe 6 et en avant de l'axe 12 ; tandis que le bras est encore nettement incliné vers l'arrière de sorte que la deuxième phase de chargement correspond à une rotation importante du bras avec soulèvement puis abaissement de le benne. En configuration de fin de chargement, le tronçon horizontal est plus haut que le faux-châssis sensiblement rectiligne et globalement parallèle au sol.

On peut noter qu'en configuration de fin de chargement (voir figures 3 et 6) le centre de gravité est sensiblement en avant de l'axe 12, et approximativement à l'aplomb de l'axe 6 vis-à-vis duquel il reste sensiblement toujours en arrière pendant la manoeuvre.

On remarque que, toutes choses égales par ailleurs, l'utilisation d'un dispositif de levage de type connu, conforme au brevet français 2.185.520, aurait conduit à la courbe de pression 24 figurant en pointillés sur le diagramme de la figure 7. Dans ce cas, on enregistrerait l'existence d'un pic de pression 250 à 350 bars, alors que le pic 22 du dispositif selon l'invention ne dépasse pas 200 bars. Autrement dit, le dispositif de l'invention permet d'obtenir dans le vérin 9, une pression hydraulique plus faible et plus régulière.

En outre, on voit qu'après chargement du conteneur 2, la position de son centre de gravité 26 sur le châssis du camion 1 dépend uniquement de la valeur de la longueur 13 choisie au montage lorsqu'on a fixé le dispositif 3, 7, 9 sur le châssis du camion 1. Autrement dit, si ce dispositif 3, 7, 9 est considéré ici comme un ensemble standard avec une distance prédéterminée entre les axes 11 et 12 d'articulation au châssis 1 du camion, on peut le monter sur des camions 1 de types divers, en restant maître de la répartition des charges sur les deux essieux 27 et 28 du camion 1 après chargement. Ainsi:

-on choisira pour la distance 13 une valeur importante (figure 6) si l'on souhaite que le centre de gravité 26 du conteneur 2 soit situé notablement en avant de l'essieu arrière 28 ;

-par contre, pour un même dispositif standard 3, 7, 9 on choisira une distance 13 de faible valeur (figure 1) si l'on souhaite que le centre de gravité 26 soit situé plus en arrière.

Naturellement, on ne quitterait pas le cadre de l'invention en choisissant à volonté pour le faux-châssis 7 (distance longitudinale séparant les axes 6 et 12) une grande longueur (figure 3) ou une faible longueur (figure 5).

## Revendications

1. Dispositif de halage destiné à équiper le châssis d'un camion à benne amovible (1), ce dispositif comprenant un bras coudé (3) terminé à son sommet par un crochet (4) qu'on peut adapter sur la face verticale avant d'une benne (2) alors que l'arrière coudé du bras (3) s'articule sur l'avant d'un faux-châssis basculant (7) où il est susceptible de venir buter sous l'action d'au moins un vérin (9) reliant ce bras (3) à l'avant du châssis du camion (1) tandis qu'enfin l'arrière du faux-châssis (7) est lui-même articulé sur le châssis du camion (1) caractérisé en ce que le point d'articulation (12) de l'arrière du faux-châssis (7) sur le châssis du camion (1) se situe en avant de l'extrémité arrière (14) du châssis dont il est séparé par une distance (13) approximativement supérieure ou égale à 0,5 fois celle des deux axes d'articulation avant (6) et arrière (12) portés par le faux-châssis (7).

2. Dispositif de halage suivant la revendication 1, caractérisé en ce qu'il est construit sous la forme d'un module standard, adaptable tel quel sur divers types de camions (1) pour manipuler divers types de bennes (2) si bien que pour monter ce module standard sur un camion (1) d'un type donné, la distance (13) selon laquelle l'axe arrière (12) du faux-châssis (7) est situé en avant de l'extrémité arrière (14) du châssis du camion (1) est calculée en tentant compte seulement de la position requise pour le centre de gravité (26) de la benne amovible (2) lorsque celle-ci est posée sur le camion en position de transport.

3. Dispositif de halage selon l'une ou l'autre des revendications ci-dessus, caractérisé en ce que la distance (13) est du même ordre de grandeur que la distance séparant les deux axes (6) et (12) portés par le faux-châssis (7).

Fig. 1

Fig. 2

0 276 620

Fig.3

Fig. 4

**Fig. 5**

**Fig. 6**

0 276 620

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 301 408 (LEMAIRE)<br>* Page 5, ligne 35 - page 6, ligne 14; figure 3 *<br>--- | | B 60 P  1/64 |
| X | FR-A-2 288 014 (LEMAIRE)<br>* Page 3, lignes 18-23; figure 2 *<br>----- | | |

DOMAINES TECHNIQUES RECHERCHES (Int. Cl.4)

B 60 P   1/64

Le présent rapport a été établi pour toutes les revendications

| Lieu de la recherche | Date d'achèvement de la recherche | Examinateur |
|---|---|---|
| LA HAYE | 14-04-1988 | SCHMITTER J.M. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons
...................................................................
& : membre de la même famille, document correspondant

EPO FORM 1503 03.82 (P0402)